# EUROPEAN PATENT APPLICATION

(11) **EP 4 276 032 A1**
(43) Date of publication of application: **15.11.2023**
(21) Application number: 22770970.6
(22) Date of filing: 14.02.2022
(51) Int. Cl.: B65D 65/40, B32B 9/00, B32B 27/32

(54) **PACKAGING MATERIAL, PACKAGING BAG AND PACKAGE**

(30) Priority: 17.03.2021 JP 2021043132
(71) Applicant: TOPPAN INC., Tokyo 110-0016 (JP)
(72) Inventor: TANAKA, Ayumi, Tokyo 110-0016 (JP); NISHIKAWA, Takeshi, Tokyo 110-0016 (JP); FUKUGAMI, Miki, Tokyo 110-0016 (JP); OCHIAI, Shinya, Tokyo 110-0016 (JP)
(74) Representative: TBK
(86) International application number: PCT/JP2022/005688
(87) International publication number: WO 2022/196211

(57) **Abstract**

Provided is a packaging material for packaging contents including fats and oils, the packaging material including: a barrier layer including a first polyolefin layer, an inorganic vapor-deposited layer, and a barrier coating layer; and a second polyolefin layer having heat-sealability, in which the first polyolefin layer includes a homopolymer layer and a copolymer layer.

## Description

### Technical Field

The present disclosure relates to a packaging material, a packaging bag, and a package. Particularly, the present disclosure relates to a packaging material for packaging contents containing fats and oils, the packaging material being capable of suppressing seepage of fats and oils and capable of material recycling. Furthermore, the present disclosure also relates to a packaging bag and a package, which use the packaging material that is capable of material recycling.

### Background Art

In order to meet the demand for forming a packaging bag with a mono-material, development of all-polyolefin mono-material packages using polyolefins is progressing. For example, a laminated film obtained by forming a polyvinyl alcohol-based resin layer on a biaxially stretched polypropylene-based resin and further sticking an unstretched polypropylene film thereon is known (for example, Patent Literature 1).

### Citation List

### Patent Literature

Patent Literature 1: Japanese Unexamined Patent Publication No. 2004-74449

### Summary of Invention

### Technical Problem

However, when a packaging bag produced using a polyolefin such as polyethylene or polypropylene as a main material is filled with contents including fats and oils and tightly sealed, seepage of fats and oils is likely to occur as compared with the case where fats and oils are fed into a packaging bag formed from a laminated body having a Ny/LLDPE configuration or a PET/Ny/CPP configuration. Therefore, there is a problem that it is difficult to use such a packaging bag for the packaging of contents including fats and oils.

The present disclosure was achieved in view of the above-described circumstances, and it is an object of the present disclosure to provide a packaging material appropriate for the packaging of contents including fats and oils by using a polyolefin as a main material. It is another object of the present disclosure to provide a packaging bag and a package, which use this packaging material.

### Solution to Problem

The inventors conducted an investigation on a polyolefin-based packaging material capable of material recycling, in which seepage of fats and oils is less likely to occur. As a result, the inventors found that the above-described object can be achieved with a packaging material in which at least a barrier layer obtained by laminating a first polyolefin layer having a predetermined layer configuration, an inorganic vapor-deposited layer, and a predetermined barrier coating layer, is laminated on a second polyolefin layer having heat sealability, thus completing the packaging material of the present disclosure.

That is, a packaging material according to an aspect of the present disclosure is a packaging material for packaging contents including fats and oils, the packaging material having: a barrier layer including a first polyolefin layer, an inorganic vapor-deposited layer, and a barrier coating layer; and a second polyolefin layer having heat sealability, in which the first polyolefin layer includes a homopolymer layer and a copolymer layer.

When a polyolefin-based packaging material is used, a cause for fats and oils permeating and seeping (bleeding) through the packaging material may be that the solubility parameter of polyolefin resins such as a polypropylene resin and a polyethylene resin and the solubility parameter of fatty acids, which are substances constituting fats and oils, are close to each other. The solubility parameter (SP value) is a value defined by the regular solution theory, and it is empirically known that as the difference between the SP values of two components is smaller, the solubility is greater. Here, the SP value of polypropylene and polyethylene is 8.0 (cal/cm³)^{1/2}. On the other hand, the SP value of oleic acid, which is a main component of canola oil, is 8.2 (cal/cm³)^{1/2}. For this reason, canola oil sorbs, dissolves, and diffuses into polypropylene and polyethylene, and as a result, canola oil seeps out from the outer surface of the packaging material. This problem of seepage of fats and oils is a problem discovered in an attempt to realize a mono-material packaging material by using a polyolefin-based material, instead of using polyethylene terephthalate (SP value: 10.7 (cal/cm³)^{1/2}) or nylon (SP value: 13.6 (cal/cm³)^{1/2}). For packaging materials produced using a polyolefin such as polyethylene or polypropylene as a main material, it is important to adopt a layer configuration such as that of the present disclosure from the viewpoint of suppressing the seepage of fats and oils. By devising the layer configuration, even when a polyolefin-based packaging material is used, fat-and-oil seepage suppressive properties of the same level as packaging materials using polyesters and the like can be obtained.

According to an embodiment, the inorganic vapor-deposited layer may include at least either aluminum oxide or silicon oxide.

According to an embodiment, the first polyolefin layer may include the homopolymer layer on the contents side.

According to an embodiment, the first polyolefin layer may include a pair of the copolymer layers and a homopolymer layer between the copolymer layers.

According to an embodiment, the packaging material may further include a printed layer on the opposite side of the barrier layer from the second polyolefin layer.

A packaging bag according to an aspect of the present disclosure is formed from the above-described packaging material.

A package according to an aspect of the present disclosure includes the above-described packaging bag and contents packaged inside the packaging bag and including fats and oils.

### Advantageous Effects of Invention

According to the present disclosure, a packaging material appropriate for the packaging of contents including fats and oils is provided by using a polyolefin as a main material. It can be said that this packaging material has excellent fat-and-oil seepage suppressive properties. According to this packaging material, seepage of fats and oils can be sufficiently suppressed even when a heating treatment that promotes seepage of fats and oils, such as boiling treatment or retort treatment, is performed. Furthermore, with regard to the packaging material, close adhesiveness between the layers constituting the packaging material (particularly between the first polyolefin layer and another layer) can be maintained satisfactorily. In addition, according to the present disclosure, a packaging bag and a package produced using the packaging material are provided.

### Brief Description of Drawings

FIG. 1 is a cross-sectional view illustrating an embodiment of a packaging material according to the present disclosure.
FIG. 2 is a cross-sectional view illustrating another embodiment of the packaging material according to the present disclosure.
FIG. 3 is a cross-sectional view illustrating another embodiment of the packaging material according to the present disclosure.

### Description of Embodiments

Hereinafter, suitable exemplary embodiments of the present disclosure will be described in detail with reference to the drawings as necessary. Incidentally, in the drawings, identical reference numerals will be assigned to identical or equivalent parts, and any redundant descriptions will not be repeated. Furthermore, the dimensional ratio of a drawing is not limited to the ratio shown in the drawing.

### <Packaging material>

The packaging material of the present disclosure is a material for packaging contents including fats and oils. It can be said that the packaging material of the present disclosure is a packaging material for packaging fat-and-oil-containing contents. Fats and oils are substances in which glycerin and fatty acids are bonded. Examples of the fats and oils include plant fats and oils such as canola oil, rapeseed oil, olive oil, sesame oil, palm oil, and cottonseed oil; animal fats and oils such as tallow (beef tallow), lard (pig fat), and fish oil; and mixtures thereof. The fats and oils may be solid at normal temperature or may be liquid. Examples of the contents including these fats and oils include curry, pasta sauces, and processed meat products.

The packaging material of the present disclosure includes a barrier layer including a first polyolefin layer, an inorganic vapor-deposited layer, and a barrier coating layer, and a second polyolefin layer having heat sealability. The barrier layer may be a laminated body in which a first polyolefin layer, an inorganic vapor-deposited layer, and a barrier coating layer are laminated in this order, and depending on the layer configuration of the packaging material, the barrier coating layer of the barrier layer may be disposed to face the second polyolefin layer side, or the first polyolefin layer of the barrier layer may be disposed to face the second polyolefin layer side.

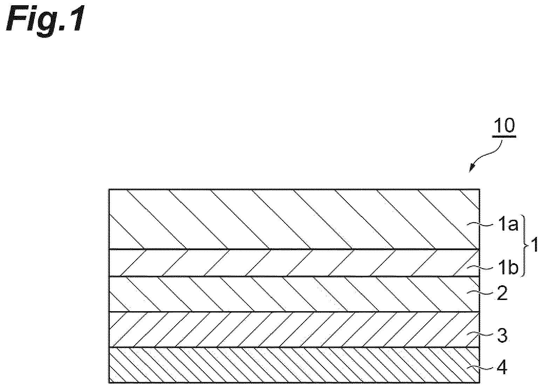

FIG. 1 is a cross-sectional view illustrating an embodiment of the packaging material according to the present disclosure. A packaging material 10 includes a homopolymer layer 1a and a copolymer layer 1b as first polyolefin layers 1, an inorganic vapor-deposited layer 2, a barrier coating layer 3, and a second polyolefin layer 4 having heat sealability, in this order. In the same diagram, the inorganic vapor-deposited layer 2 is formed on one surface of the first polyolefin layer 1; however, the inorganic vapor-deposited layer 2 may be formed on both surfaces of the first polyolefin layer 1. Furthermore, the second polyolefin layer 4 may be laminated on the barrier coating layer 3, with a bonding adhesive layer (not shown in the diagram) interposed therebetween.

In FIG. 1, the barrier coating layer 3 is disposed to face the contents side (second polyolefin layer 4 side), and the first polyolefin layer 1 is disposed to be farther than the contents. As a result, more satisfactory fat-and-oil seepage suppressive properties can be obtained. In the same diagram, the positions of the homopolymer layer 1a and the copolymer layer 1b may be switched; however, when the copolymer layer 1b is disposed toward the barrier coating layer 3 side, the interlayer close adhesiveness is more excellent, and the gas barrier properties after boiling treatment or retort treatment are further improved, as compared with the case in which the homopolymer layer 1a is disposed toward the barrier coating layer 3 side.

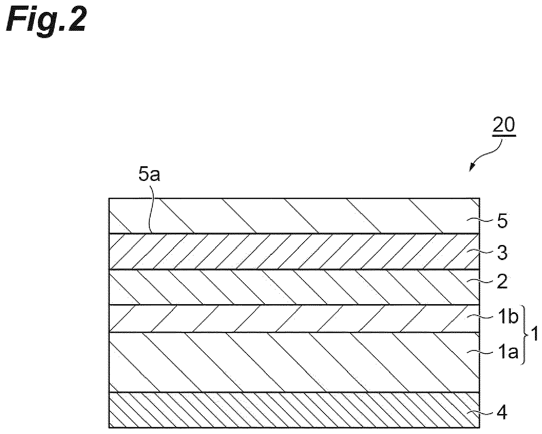

FIG. 2 is a cross-sectional view illustrating another embodiment of the packaging material according to the present disclosure. A packaging material 20 includes a printed layer 5, a barrier coating layer 3, an inorganic vapor-deposited layer 2, a copolymer layer 1b and a homopolymer layer 1a as first polyolefin layers 1, and a second polyolefin layer 4 having heat sealability, in this order. The printed layer 5 is disposed such that a printed surface 5a faces toward the inner surface of the packaging material. In the same diagram, the inorganic vapor-deposited layer 2 is formed on one surface of the first polyolefin layer 1; however, the inorganic vapor-deposited layer 2 may be formed on both surfaces of the first polyolefin layer 1. The second polyolefin layer 4 may be laminated on the first polyolefin layer 1, with a bonding adhesive layer (not shown in the diagram) interposed therebetween, and the printed layer 5 may be laminated on the barrier coating layer 3, with a bonding adhesive layer (not shown in the diagram) interposed therebetween.

In FIG. 2, the first polyolefin layer 1 is disposed toward the contents side, and the barrier coating layer 3 is disposed farther than the contents. As a result, more satisfactory gas barrier properties after boiling treatment or retort treatment can be obtained. In the same diagram, the positions of the homopolymer layer 1a and the copolymer layer 1b may be switched; however, when the copolymer layer 1b is disposed to face the barrier coating layer 3 side, the fat-and-oil seepage suppressive properties are excellent, and the interlayer close adhesiveness and the gas barrier properties after boiling treatment or retort treatment are further improved as compared with a case where the homopolymer layer 1a is disposed to face the barrier coating layer 3 side.

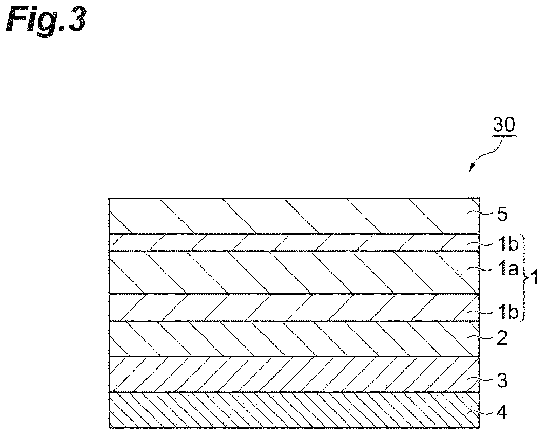

FIG. 3 is a cross-sectional view illustrating an embodiment of the packaging material according to the present disclosure. A packaging material 30 includes a printed layer 5, a pair of copolymer layers 1b and a homopolymer layer 1a between these layers as first polyolefin layers 1, an inorganic vapor-deposited layer 2, a barrier coating layer 3, and a second polyolefin layer 4 having heat sealability, in this order. In the same diagram, the inorganic vapor-deposited layer 2 is formed on one surface of the first polyolefin layer 1; however, the inorganic vapor-deposited layer 2 may be formed on both surfaces of the first polyolefin layer 1. Furthermore, the second polyolefin layer 4 may be laminated on the barrier coating layer 3, with a bonding adhesive layer (not shown in the diagram) interposed therebetween, and the printed layer 5 may be laminated on the first polyolefin layer 1, with a bonding adhesive layer (not shown in the diagram) interposed therebetween.

In FIG. 3, the barrier coating layer 3 is disposed to face the contents side (second polyolefin layer 4 side), and an operating effect similar to that shown in FIG. 1 can be obtained. In the same diagram, since the first polyolefin layer 1 has the copolymer layer 1b on both sides thereof, the first polyolefin layer 1 has more excellent interlayer close adhesiveness to adjacent layers and has more excellent gas barrier properties after boiling treatment or retort treatment.

### (First polyolefin layer)

The first polyolefin layer serves as a base material (polyolefin film) for forming an inorganic vapor-deposited layer. The first polyolefin layer includes a homopolymer layer and a copolymer layer. The homopolymer layer can be called a core layer, and the copolymer layer can be called a skin layer. By adopting a configuration with multiple layers for the first polyolefin layer and devising the layer configuration, it is possible to obtain a packaging material that not only has more excellent fat-and-oil seepage suppressive properties, but also has excellent other properties such as interlayer close adhesiveness and barrier properties, in comparison with a single layer configuration.

The homopolymer layer is likely to suppress the permeation of fats and oils and the seepage of fats and oils. Examples of the polyolefin constituting the homopolymer layer include polyethylene and polypropylene.

When vapor deposition processing, printing processing, bag-making processing, filling suitability, and the like are taken into consideration, the polyethylene may be a high-density polyethylene (HDPE). Furthermore, in order to improve physical properties such as flexibility, the homopolymer layer may have, for example, a multilayer configuration such as high-density polyethylene (HDPE)/medium-density polyethylene (MDPE)/low-density polyethylene (LDPE)/medium-density polyethylene (MDPE)/high-density polyethylene (HDPE) formed by a co-extrusion method.

The polypropylene may be an oriented polypropylene (OPP). In the case of using polypropylene as a base material film for a package, homopolymer polypropylene is preferred.

The copolymer layer (a layer of a copolymer or a layer of a terpolymer) is likely to improve the close adhesiveness and sealability between the layers constituting the packaging material. The copolymer layer is also a polyolefin layer, and from the viewpoint of sufficiently exhibiting the above-described functions as the copolymer layer, the content of a monomer unit based on an olefin is preferably more than 50% by mass, more preferably 75% by mass or more, and even more preferably 90% by mass or more, based on the total amount of the copolymer layer.

Examples of the copolymer constituting the copolymer layer include copolymers, including ethylene-based resins such as an ethylene-vinyl acetate copolymer (EVA), an ethylene-α-olefin copolymer, and an ethylene-(meth)acrylic acid copolymer; and polypropylene-based resins such as a propylene-ethylene random copolymer, a propylene-ethylene block copolymer, and a propylene-α-olefin copolymer.

The terpolymer constituting the copolymer layer may be a copolymer having monomer units based on the monomers constituting the above-described copolymer and a monomer unit based on a monomer other than those monomers.

The first polyolefin layer can be formed by co-extruding a homopolymer layer, which is a core layer, and a copolymer layer (layer of a copolymer or a terpolymer), which is a skin layer. For example, when OPP of a homopolymer is used for the homopolymer layer, from the viewpoint of close adhesiveness between layers, OPP of a copolymer or a terpolymer may be used for the copolymer layer.

From the viewpoint of easily securing the fat-and-oil seepage suppressive properties, it is preferable that the first polyolefin layer includes the homopolymer layer on the contents side. That is, it is preferable that the first polyolefin layer includes the homopolymer layer on the second polyolefin layer (heat-seal layer) side.

From the viewpoint of easily securing the gas barrier properties after boiling treatment or retort treatment, it is preferable that the first polyolefin layer includes the copolymer layer on the contents side. That is, it is preferable that the first polyolefin layer includes the copolymer layer on the second polyolefin layer (heat-seal layer) side.

From the viewpoint of easily securing interlayer close adhesiveness to adjacent layers, it is preferable that the first polyolefin layer includes a pair of copolymer layers and a homopolymer layer between the copolymer layers. Each layer constituting the pair of copolymer layers may be formed from the same material or may be formed from different materials.

The polyolefin film as the homopolymer layer and the copolymer layer, which constitute the first polyolefin layer, may be a stretched film or may be an unstretched film. However, from the viewpoints of impact resistance, heat resistance, water resistance, dimensional stability, and the like, the polyolefin film may be a stretched film. As a result, the packaging material can be more suitably used for use in hot filling and in applications where hot water treatment is applied, such as boiling treatment and retort treatment. The stretching method is not particularly limited, and any method such as stretching by inflation, uniaxial stretching, or biaxial stretching, may be used as long as a film with stabilized dimensions can be supplied.

The thickness of the first polyolefin layer is not particularly limited. This thickness can be set to 6 to 200 µm according to the use application; however, from the viewpoint of obtaining excellent impact resistance and excellent gas barrier properties, the thickness may be 9 to 50 µm or may be 12 to 38 µm.

The thickness of the copolymer layer (when there are a plurality of layers, individual layers) can be set to 0.5 to 3 µm and may be 0.6 to 2.5 µm. When the thickness of the copolymer layer is 0.5 µm or more, smoothness and impact resistance are likely to be improved, and when the thickness is 3 µm or less, heat resistance and oil resistance are likely to be improved. When there is a plurality of copolymer layers, the thicknesses of the individual layers may be identical or different.

The thickness of the homopolymer layer may be appropriately adjusted such that the thickness of the first polyolefin layer is preferably in the above-described range.

The first polyolefin layer may be subjected to various pretreatments such as corona treatment, plasma treatment, and flame treatment to the extent that does not impair the barrier performance, in order to improve the close adhesiveness to the inorganic vapor-deposited layer.

### (Close adhesion layer)

On a surface of the first polyolefin layer, where the inorganic vapor-deposited layer is laminated, a close adhesion layer (anchor coat layer or underlayer) may be provided. The close adhesion layer can provide two effects such as improvement of close adhesion performance between the first polyolefin layer and the inorganic vapor-deposited layer, and improvement of smoothness of the polyolefin layer surface. Incidentally, as smoothness is improved, it is easier to form the inorganic vapor-deposited layer uniformly without defects, and high barrier properties are likely to be exhibited.

The thickness of the close adhesion layer is not particularly limited; however, the thickness can be set to 0.01 to 5 µm, may be 0.03 to 3 µm, or may be in the range of 0.04 to 2 µm. When the thickness of the close adhesion layer is equal to or more than the above-described lower limit value, more sufficient interlayer adhesive strength tends to be obtained, and when the thickness is equal to or less than the above-described upper limit value, desired gas barrier properties tend to be easily exhibited.

The close adhesion layer can be formed by using an anchor coat agent. Examples of the anchor coat agent include a polyester-based polyurethane resin, a polyether-based polyurethane resin, and an acrylic polyurethane resin. Among these, from the viewpoints of heat resistance and interlayer adhesive strength, the anchor coat agent may be an acrylic polyurethane resin.

Regarding a method for forming a close adhesion layer on the first polyolefin layer, any known coating method can be used without particular limitation, and examples include an immersion method (dipping method); and methods of using a spray, a coater, a printer, a brush, and the like. Furthermore, the types of the coater and the printer used in these methods as well as their coating modes include gravure coaters of a direct gravure mode, a reverse gravure mode, a kiss reverse gravure mode, an offset gravure mode, and the like; a reverse roll coater, a microgravure coater, a chamber doctor combination coater, an air knife coater, a dip coater, a bar coater, a comma coater, a die coater, and the like.

The coating amount of the close adhesion layer (mass per 1 m² after the anchor coat agent is applied and dried) can be set to 0.01 to 5 g/m² and may be adjusted to 0.03 to 3 g/m². When the coating amount is equal to or more than the above-described lower limit, film formation tends to be sufficiently achieved, and on the other hand, when the coating amount is less than or equal to or the above-described upper limit, there is a tendency that the close adhesion layer is likely to be sufficiently dried, and the solvent is less likely to remain behind.

The method for drying the close adhesion layer is not particularly limited; however, a method based on natural drying, a method of drying in an oven set to a predetermined temperature, a method of using a dryer attached to the above-described coater (for example, an arch dryer, a floating dryer, a drum dryer, or an infrared dryer), and the like may be mentioned. The conditions for drying can be appropriately selected according to the method of drying. For example, in the method of drying in an oven, drying can be achieved at a temperature of 60°C to 100°C for about 1 second to 2 minutes.

From the viewpoint of improving the close adhesiveness between a base material layer and the inorganic vapor-deposited layer, the anchor coat agent may contain a silane coupling agent. A silane coupling agent including any organic functional group can be used; however, particularly a silane coupling agent having a functional group that reacts with a hydroxyl group of a polyol or an isocyanate group of an isocyanate compound can be used. Examples of the silane coupling agent include agents including an isocyanate group, such as γ-isocyanatopropyltriethoxysilane and γ-isocyanatopropyltrimethoxysilane; agents including a mercapto group, such as γ-mercaptopropyltriethoxysilane; agents including an amino group, such as γ-aminopropyltriethoxysilane, γ-aminopropyltrimethoxysilane, N-β-(aminoethyl)-γ-aminopropyltriethoxysilane, and γ-phenylaminopropyltrimethoxysilane; agents including an epoxy group, such as γ-glycidoxypropyltrimethoxysilane and β-(3,4-epoxycyclohexyl)ethyltrimethoxysilane; agents including a vinyl group, such as vinyltrimethoxysilane and vinyltris(β-methoxyethoxy)silane; agents including an acryloyl group, such as y methacryloxypropyltrimethoxysilane and γ-methacryloxypropylmethyldimethoxysilane; γ-chloropropylmethyldimethoxysilane and γ-chloropropyltrimethoxysilane; and hydrolysates of these. These can be used singly or in combination of two or more kinds thereof.

The amount of the silane coupling agent can be set to 0.1 to 100 parts by mass and may be 1 to 50 parts by mass, with respect to 100 parts by mass of the resin (main agent) constituting the close adhesion layer.

### (Inorganic vapor-deposited layer)

The inorganic vapor-deposited layer has a function of suppressing seepage of fats and oils included in the package contents, from the surface of the first polyolefin layer. Examples of the constituent material of the inorganic vapor-deposited layer include inorganic oxides such as aluminum oxide, silicon oxide, magnesium oxide, and tin oxide. Therefore, the inorganic vapor-deposited layer can be called an inorganic oxide layer. From the viewpoints of transparency and barrier properties, the inorganic oxide may be selected from the group consisting of aluminum oxide, silicon oxide, and magnesium oxide. In addition, from the viewpoints of printing suitability and cost, the inorganic oxide may be selected from aluminum oxide and silicon oxide. In addition, from the viewpoint of having excellent tensile stretchability during processing, the inorganic oxide may be silicon oxide. By using an inorganic vapor-deposited layer, high barrier properties, fat-and-oil seepage suppressive properties, and the like can be obtained with a layer that is very thin to the extent that does not affect recyclability of a gas barrier laminated body.

When aluminum oxide is selected as the inorganic vapor-deposited layer, the O/Al ratio may be 1.4 or more. When the O/Al ratio is 1.4 or more, the content percentage of metal Al is suppressed, and satisfactory transparency is likely to be obtained. Furthermore, the O/Al ratio may be 1.7 or less. When the O/Al ratio is 1.7 or less, the inorganic vapor-deposited layer is prevented from becoming too hard, the fat-and-oil seepage suppressive properties are likely to be secured, and satisfactory tensile resistance is also likely to be obtained. Furthermore, the first polyolefin layer may shrink due to heat during hot filling of a packaging bag or due to hot water treatment such as boiling treatment or retort treatment; however, when the O/Al ratio is 1.7 or less, the inorganic vapor-deposited layer is likely to follow the above-described shrinkage, and deterioration of the barrier properties, fat-and-oil seepage suppressive properties, and the like is likely to be suppressed. From the viewpoint of more sufficiently obtaining these effects, the O/Al ratio of the aluminum oxide layer can be set to 1.4 or more and 1.7 or less and may be 1.5 or more and 1.55 or less.

When silicon oxide is selected as the inorganic vapor-deposited layer, the O/Si ratio may be 1.7 or more. When the O/Si ratio is 1.7 or more, the content percentage of metal Si is suppressed, and satisfactory transparency is likely to be obtained. Furthermore, the O/Si ratio may be 2.0 or less. When the O/Si ratio is 2.0 or less, the inorganic vapor-deposited layer is prevented from becoming too hard, the fat-and-oil seepage suppressive properties are likely to be secured, and satisfactory tensile resistance is also likely to be obtained. Furthermore, the first polyolefin layer may shrink due to heat during hot filling of a packaging bag or due to hot water treatment such as boiling treatment or retort treatment; however, when the O/Si ratio is 2.0 or less, the inorganic vapor-deposited layer is likely to follow the above-described shrinkage, and deterioration of the barrier properties, fat-and-oil seepage suppressive properties, and the like is likely to be suppressed. From the viewpoint of more sufficiently obtaining these effects, the O/Si ratio of the silicon oxide layer can be set to 1.75 or more and 1.9 or less and may be 1.8 or more and 1.85 or less.

The O/Al ratio and the O/Si ratio of the inorganic vapor-deposited layer can be determined by X-ray photoelectron spectroscopy (XPS). For example, measurement can be made by using an X-ray photoelectron spectrometer (manufactured by JEOL, Ltd., trade name: JPS-90MXV) as a measuring apparatus and using non-monochromatic MgKα, (1253.6 eV) as an X-ray source at an X-ray output of 100 W (10 kV - 10 mA).

The thickness of the inorganic vapor-deposited layer may be 5 nm or more and 60 nm or less. When the thickness is 5 nm or more, sufficient fat-and-oil seepage suppressive properties and gas barrier properties are likely to be obtained. Furthermore, when the thickness is 60 nm or less, generation of cracks due to deformation caused by the internal stress of the layer is suppressed, and deterioration of the fat-and-oil seepage suppressive properties and the gas barrier properties is likely to be suppressed. When the thickness is more than 60 nm, the cost is likely to be increased due to an increase in the amount of materials used, an increase in the time for layer formation, and the like. From the above-described viewpoint, the thickness of the inorganic vapor-deposited layer may be 10 nm or more and 50 nm or less.

The inorganic vapor-deposited layer can be formed by, for example, a vacuum film-forming method. Examples of the vacuum film-forming method include a physical vapor phase epitaxy method and a chemical vapor phase epitaxy method. Examples of the physical vapor phase epitaxy method include a vacuum vapor deposition method, a sputtering method, and an ion plating method; however, the physical vapor phase epitaxy method is not limited to these. Examples of the chemical vapor phase epitaxy method include a thermal CVD method, a plasma CVD method, and a photo CVD method; however, the chemical vapor phase epitaxy method is not limited to these.

Examples of the vacuum film-forming method include a resistant heating type vacuum vapor deposition method, an EB (Electron Beam) heating type vacuum vapor deposition method, an induction heating type vacuum vapor deposition method, a sputtering method, a reactive sputtering method, a dual magnetron sputtering method, and a plasma-enhanced chemical vapor deposition method (PECVD method). When considering productivity, a vacuum vapor deposition method is the best at present. As heating means for the vacuum vapor deposition method, any one of an electron beam heating mode, a resistance heating mode, and an induction heating mode can be used.

### (Barrier coating layer)

The barrier coating layer has a function of protecting the inorganic vapor-deposited layer while at the same time, imparting gas barrier properties to the packaging material. In contrast to the anchor coat layer, the barrier coating layer can also be called an overcoat layer. Although not particularly limited, the barrier coating layer may include a water-soluble polymer. More specifically, the barrier coating layer may be formed from a liquid composition including a water-soluble polymer and may be said to be a heat-dried product (heat-cured product) of the composition. A water-soluble polymer refers to a polymer that can be dissolved in water.

Examples of the water-soluble polymer include a polyvinyl alcohol resin and a modified body thereof, and polyacrylic acid. These can be used singly or in combination of two or more kinds thereof. When a polyvinyl alcohol resin or a modified body thereof is used as the water-soluble polymer, excellent gas barrier properties and fat-and-oil seepage suppressive properties are easily imparted to the packaging material.

The water-soluble polymer may be cured by using a curing agent. The curing agent is not particularly limited; however, from the viewpoint of maintaining excellent laminate strength even after retort treatment, a metal alkoxide or a silane coupling agent can be used.

Examples of the metal alkoxide include a compound represented by the following General Formula (I).

M(OR¹)ₘ(R²)ₙ₋ₘ ... (I)

In the above-described General Formula (I), R¹ and R² each independently represent a monovalent organic group having 1 to 8 carbon atoms and may be an alkyl group such as a methyl group or an ethyl group. M represents an n-valent metal atom such as Si, Ti, Al, or Zr. m is an integer of 1 to n. Incidentally, when a plurality of R¹ or R² are present, R¹'s or R²'s may be identical with or different from each other.

Specific examples of the metal alkoxide include tetraethoxysilane [Si(OC₂H₅)₄] and triisopropoxyaluminum [Al(O-sec-C₄H₉)₃]. These metal alkoxides are relatively stable in a water-based solvent after hydrolysis.

Examples of the silane coupling agent include a compound represented by the following General Formula (II).

Si(OR¹)ₚ(R²)₃₋ₚR³ ... (II)

In the above-described General Formula (II), R¹ represents an alkyl group such as a methyl group or an ethyl group; R² represents a monovalent organic group such as an alkyl group, an aralkyl group, an aryl group, an alkenyl group, an acryloxy group, or an alkyl group substituted with a methacryloxy group; R³ represents a monovalent organic functional group; and p represents an integer of 1 to 3. Incidentally, when there are a plurality of R¹'s or R²'s, R¹'s or R²'s may be identical with or different from each other. Examples of the monovalent organic functional group represented by R³ include a vinyl group, an epoxy group, a mercapto group, an amino group, or a monovalent organic functional group containing an isocyanate group.

Examples of the silane coupling agent include silane coupling agents having a vinyl group, such as vinyltrimethoxysilane and vinyltriethoxysilane; silane coupling agents having an epoxy group, such as 3-glycidoxypropyltrimethoxysilane, 3-glycidoxypropyltriethoxysilane, 3-glycidoypropylmethyldimethoxysilane, and 3-glycidoxypropylethyldiethoxysilane; silane coupling agents having a mercapto group, such as 3-mercaptopropyltrimethoxysilane and 3-mercaptopropylmethyldimethoxysilane; silane coupling agents having an amino group, such as 3-aminopropyltrimethoxysilane and 3-aminopropyltriethoxysilane; and silane coupling agents having an isocyanate group, such as 3-isocyanatopropyltriethoxysilane. These silane coupling agents may be used singly or in combination of two or more kinds thereof.

The barrier coating layer may be formed from a liquid composition including a water-dispersible polymer in addition to or instead of a water-soluble polymer and may be a heat-dried product of the composition. A water-dispersible polymer refers to a polymer that is dispersed in water. Regarding the water-dispersible polymer, for example, a polyurethane dispersion in which a polyurethane resin is dispersed in water may be mentioned.

The barrier coating layer is formed by using a liquid composition (hereinafter, also referred to as an overcoat agent) obtained by adding a raw material including a water-soluble polymer and optionally a curing agent to water or a water-alcohol mixed liquid. The barrier coating layer may also be formed by using a liquid composition obtained by adding a raw material including a water-dispersible polymer, optionally a water-soluble polymer, and optionally a curing agent to water or a water/alcohol mixed liquid.

For example, when tetraethoxysilane is used as the metal alkoxide, from the viewpoint of maintaining the fat-and-oil seepage suppressive properties, close adhesiveness to the inorganic vapor-deposited layer, and gas barrier properties, the amount of a hydrolysate (SiO₂) of tetraethoxysilane/amount of water-soluble polymer or water-dispersible polymer in the overcoat agent can be set to 0/100 to 80/20 in terms of mass ratio and may be 3/97 to 75/25 or may be 30/70 to 50/50.

From the viewpoint of maintaining the fat-and-oil seepage suppressive properties, close adhesiveness to the inorganic vapor-deposited layer, and gas barrier properties, the amount of the silane coupling agent in the overcoat agent can be set to 0% to 20% by mass or may be 0% to 15% by mass, based on the total solid content of the overcoat agent.

The overcoat agent may include known additives such as a dispersant, a stabilizer, a viscosity adjusting agent, a colorant, and metal oxide particles, to the extent that does not impair the fat-and-oil seepage suppressive properties and gas barrier properties.

The overcoat agent can be applied by, for example, a dipping method, a roll coating method, a gravure coating method, a reverse gravure coating method, an air knife coating method, a comma coating method, a die coating method, a screen printing method, a spray coating method, or a gravure offset method. A coating film obtained by applying the overcoat agent can be dried by, for example, a hot air drying method, a hot roll drying method, a high-frequency irradiation method, an infrared irradiation method, a UV irradiation method, or a combination thereof.

The temperature at the time of drying the coating film can be set to, for example, 50°C to 150°C or may be 70°C to 100°C. By setting the temperature during drying in the above-described range, generation of cracks in the inorganic vapor-deposited layer and the barrier coating layer is likely to be suppressed, and excellent barrier properties can be exhibited.

The thickness of the barrier coating layer is preferably 50 to 1000 nm, and more preferably 100 to 500 nm. When the thickness of the barrier coating layer is 50 nm or more, there is a tendency that more sufficient gas barrier properties can be obtained while protecting the inorganic vapor-deposited layer, and when the thickness is 1000 nm or less, there is a tendency that sufficient flexibility can be maintained.

### (Second polyolefin layer)

A second polyolefin layer is formed from a material having a lower melting point than the constituent material of the first polyolefin layer and has heat-sealability. Therefore, the second polyolefin layer can also be called a sealant layer. The second polyolefin layer may be an unstretched film (for example, CPP).

The first polyolefin layer and the second polyolefin layer may include different materials; however, from the viewpoint of the ease of re-forming through melting of a resin material, the two layers may include the same material. Here, including the same material implies that, for example, both the layers include an ethylene-based resin, or both the layers include a propylene-based resin.

When the first polyolefin layer includes an ethylene-based resin, ethylene-based resins such as a low-density polyethylene resin (LDPE), a medium-density polyethylene resin (MDPE), a linear low-density polyethylene (LLDPE), an ethylene-vinyl acetate copolymer (EVA), an ethylene-α-olefin copolymer, and an ethylene-(meth)acrylic acid copolymer; a blended resin of polyethylene and polybutene; and the like can be used as the second polyolefin layer. Furthermore, for the purpose of imparting rigidity or the like, a film having a laminated configuration obtained by co-extruding high-density polyethylene (HDPE) or medium-density polyethylene (MDPE) on the barrier layer side and low-density polyethylene (LDPE) on the heat-seal side, can also be used as the second polyolefin layer.

When the first polyolefin layer includes a propylene-based resin, propylene-based resins such as a homopolypropylene resin (PP), a propylene-ethylene random copolymer, a propylene-ethylene block copolymer, and a propylene-α-olefin copolymer; and the like can be used as the second polyolefin layer.

In the polyolefin film constituting the second polyolefin layer, various additive materials such as a flame retardant, a slipping agent, an anti-blocking agent, an oxidation inhibitor, a photostabilizer, and a tackifier may be added.

The thickness of the second polyolefin layer is determined according to the mass of the contents, the shape of the packaging bag, and the like, and for example, the thickness can be set to 30 to 150 µm.

### (Printed layer)

A printed layer can be provided on the opposite side of the barrier layer from the second polyolefin layer. The printed layer includes a printed surface on a printing base material, and the printed surface (ink layer) of the printed layer faces the barrier layer side. The printing base material may be a polyolefin layer, and the polyolefin constituting this polyolefin layer may be a polyolefin mentioned as an example for the first polyolefin layer.

The printed layer is provided at a position visible from the outside of the packaging bag, for the purpose of displaying information about the contents, identifying the contents, or improving the design properties. The printing method and printing ink for forming the printed layer are not particularly limited and are appropriately selected from known printing methods and printing inks, in consideration of printing suitability, design properties such as color tone, close adhesiveness, safety as a food container, and the like. Regarding the printing method, for example, a gravure printing method, an offset printing method, a gravure offset printing method, a flexographic printing method, and an inkjet printing method can be used. A gravure printing method can be preferably used from the viewpoints of productivity and high definition of the pattern.

### (Bonding adhesive layer)

The barrier layer and the second polyolefin layer may be laminated, with a bonding adhesive layer interposed therebetween. The barrier layer and the printed layer may be laminated, with a bonding adhesive layer interposed therebetween. Regarding the means for laminating each layer, all of known lamination methods such as a dry lamination method of sticking together with an adhesive such as a one-liquid curing type or two-liquid curing type urethane-based adhesive, a non-solvent dry lamination method of sticking together by using a solventless adhesive, and an extrusion lamination method of heating and melting a polyolefin resin such as polyethylene or polypropylene, extruding the resin into a curtain shape, and sticking together, can be employed.

As described above, all the films constituting the packaging material (first polyolefin layer, second polyolefin layer, and printed layer) can be polyolefin films. Such a packaging material can be said to be a material formed from a single material (mono-material) having excellent recyclability. From this viewpoint, the total mass of components other than the polyolefin component (for example, components of the close adhesion layer, the metal vapor-deposited layer, the barrier coating layer, the bonding adhesive layer, the printed layer, and the like) can be set to 10% by mass or less with respect to the total mass of the packaging material, and the total mass may be 7.5% by mass or less or may be 5.0% by mass or less.

### <Packaging bag and package>

A packaging bag can be obtained by arranging the second polyolefin layers of a packaging material obtained in this way to face each other and heat-sealing the second polyolefin layers. A package can be obtained by filling a packaging bag obtained in this way with contents including fats and oils and sealing the packaging bag.

### <Other embodiments>

The present exemplary embodiment can include the following embodiments.

A packaging material for packaging contents including fats and oils, the packaging material including: a barrier layer including a first polyolefin layer, an inorganic vapor-deposited layer, and a barrier coating layer; and a second polyolefin layer having heat-sealability.

The above-described packaging material, in which the inorganic vapor-deposited layer includes at least any one of aluminum oxide and silicon oxide.

The above-described packaging material, in which the first polyolefin layer is formed from a homopolymer.

The above-described packaging material, in which the first polyolefin layer and the second polyolefin layer are formed from the same material.

The above-described packaging material, in which the first polyolefin layer and the second polyolefin layer are formed from polyethylene.

The above-described packaging material, in which the first polyolefin layer and the second polyolefin layer are formed from polypropylene.

The above-described packaging material, further including a printed layer on the opposite side of the barrier layer from the second polyolefin layer.

A packaging bag formed from the above-described packaging material.

A package including the above-described packaging bag and contents including fats and oils packaged in the packaging bag.

### Examples

Hereinafter, the present disclosure will be described more specifically by way of Experimental Examples; however, the present disclosure is not intended to be limited to these Experimental Examples.

### (Base material layer: First polyolefin layer)

The following films were prepared as base material layers.
HDPE film: SMUQ manufactured by TOKYO PRINTING INK MFG. CO., LTD., thickness 25 µm
OPP film: U-1 manufactured by Mitsui Chemicals Tohcello, Inc., thickness 20 µm
OPP (core layer, homopolymer layer)/OPP (skin layer, copolymer layer) laminated film: Thickness 20 µm (core layer thickness 19 µm, skin layer thickness 1 µm)
OPP (skin layer, copolymer layer)/OPP (core layer, homopolymer layer)/OPP (skin layer, copolymer layer) laminated film: Thickness 21 µm (core layer thickness 19 µm, skin layer thickness 1 µm each)

### (Close adhesion layer)

Acrylic polyol and tolylene diisocyanate were mixed such that the number of NCO groups of tolylene diisocyanate is equal to the number of OH groups of acrylic polyol, and the mixture was diluted with ethyl acetate such that the total solid content (total amount of acrylic polyol and tolylene diisocyanate) was 5% by mass. β-(3,4-epoxycyclohexyl)ethyltrimethoxysilane was further added to the mixed liquid after dilution such that the amount was 5 parts by mass with respect to 100 parts by mass of the total amount of acrylic polyol and tolylene diisocyanate, and these were mixed to prepare an anchor coat agent. The prepared anchor coat agent was applied on the base material layer by a gravure coating method and dried to form a close adhesion layer having a thickness of 40 nm (except for Experimental Example 18).

In Experimental Example 18, a close adhesion layer (bonding adhesive layer) having a thickness of 2 µm was formed by using a two-liquid curing type urethane-based adhesive (A525/A52) manufactured by Mitsui Chemicals, Inc., instead of the above-described anchor coat agent.

### (Inorganic oxide layer: Inorganic vapor-deposited layer)

An aluminum oxide vapor-deposited layer (AlOx layer) or a silicon oxide vapor-deposited layer (SiOx layer) was formed on the base material layer (close adhesion layer in some cases) by using a vacuum vapor deposition apparatus in an electron beam heating mode. The layer thickness was set to 50 nm in all cases. The O/Al ratio of the aluminum oxide vapor-deposited layer was 1.52, and the O/Si ratio of the silicon oxide vapor-deposited layer was 1.81.

### (Barrier coating layer)

Each of various coating liquids prepared as follows was applied on the inorganic oxide layer base material layer (in some cases, base material layer) by a gravure coating method and was heated and dried to form a barrier coating layer having a thickness of 500 nm (except for Experimental Example 18) or 1 µm (Experimental Example 18).

PVA layer: An aqueous solution of polyvinyl alcohol (PVA) using PVA124 manufactured by Kuraray Co., Ltd. was used as a coating liquid.

PVA/TEOS layer: A solution obtained by mixing tetraethoxysilane (TEOS), methanol, and 0.1 N hydrochloric acid at a mass ratio of 45/15/40 and hydrolyzing TEOS, and a 5% aqueous solution of PVA124 were mixed such that the content percentage of the content of TEOS hydrolysate (SiO₂) and the content of PVA was 40/60 (TEOS/ PVA) in terms of mass ratio to prepare a coating liquid.

PAA/DA/ZnO layer: A PAA solution obtained by dissolving AC-10LP (polyacrylic acid (PAA), weight average molecular weight 50000) manufactured by TOAGOSEI CO., LTD. in isopropanol (IPA) such that the content was 10% by mass, and a zinc oxide liquid dispersion obtained by dissolving DISPARLON DA-375 (polyether phosphoric acid ester (DA)) manufactured by Kusumoto Chemicals, Ltd. in IPA such that the content was 10% by mass, and adding FINEX-30 (zinc oxide) manufactured by SAKAI CHEMICAL INDUSTRY CO., LTD. thereto such that the content was 30% by mass to be dispersed therein, were mixed such that the molar ratio of PAA and zinc oxide was 1: 1 to prepare a coating liquid.

PU layer: An aqueous solution using TAKELAC WPB-341 (polyurethane dispersion (PU)) manufactured by Mitsui Chemicals, Inc. was used as a coating liquid.

PU/PVA layer: An aqueous solution including TAKELAC WPB-341 and PVA124 at mass proportions of solid content of 65/35 was used as a coating liquid.

PVA/PAA layer: An aqueous solution including PVA124 and a polyacrylic acid-based resin at mass proportions of solid content of 97/3 was used as a coating liquid.

### (Bonding adhesive layer)

For the lamination of the barrier layer and the printed layer and the lamination of the barrier layer and the heat-seal layer, a two-liquid curing type urethane-based adhesive (A525/A52) manufactured by Mitsui Chemicals, Inc. was used.

### (Heat-seal layer: Second polyolefin layer)

The following films were prepared as heat-seal layers.
LLDPE film: TUX MC-S manufactured by Mitsui Chemicals Tohcello, Inc., thickness 60 µm
CPP film: TORAYFAN ZK207 manufactured by TORAY ADVANCED FILM Co., Ltd., thickness 60 µm

### (Printed layer)

Printing was performed on an OPP film (manufactured by Mitsui Chemical Tohcello, Inc., U-1, thickness 20 µm) by gravure printing (lattice printing) using an ink (manufactured by SAKATA INX CORPORATION, BELLE COLOR R White 120).

Packaging materials having the configurations shown in Table 1 were obtained by using the above-described various materials. The printed surface of the printed layer faced the base material layer side.

**[Table 1]**

| | Configuration | | | | | | |
|---|---|---|---|---|---|---|---|
| | Printed layer | Base material layer | Close adhesion layer | Barrier layer | | Heat-seal layer (HS layer) | Order of lamination* |
| | | | | Inorganic oxide layer | Barrier coating layer | | |
| Experimental Example 1 | - | HDPE | - | SiOx | PVA | LLDPE | Base material layer / barrier layer / HS layer |
| Experimental Example 2 | - | HDPE | Present | SiOx | PVA | LLDPE | Base material layer / barrier layer / HS layer |
| Experimental Example 3 | - | OPP | Present | SiOx | PVA | CPP | Base material layer / barrier layer / HS layer |
| Experimental Example 4 | - | OPP | Present | SiOx | PVA/TEOS | CPP | Base material layer / barrier layer / HS layer |
| Experimental Example 5 | - | OPP | Present | SiOx | PAA/DA/ZnO | CPP | Base material layer / barrier layer / HS layer |
| Experimental Example 6 | - | OPP | Present | SiOx | PU | CPP | Base material layer / barrier layer / HS layer |
| Experimental Example 7 | - | OPP | Present | SiOx | PU/PVA | CPP | Base material layer / barrier layer / HS layer |
| Experimental Example 8 | - | OPP | Present | AlOx | PVA/TEOS | CPP | Base material layer / barrier layer / HS layer |
| Experimental Example 9 | Present | OPP | Present | SiOx | PVA/TEOS | CPP | Printed layer / barrier layer / base material layer / HS layer |
| Experimental Example 10 | - | OPP/OPP | Present | SiOx | PVA/TEOS | CPP | Base material layer / barrier layer / HS layer |
| Experimental Example 11 | Present | OPP/OPP | Present | SiOx | PVA/TEOS | CPP | Printed layer / barrier layer / base material layer / HS layer |
| Experimental Example 12 | Present | OPP/OPP | Present | SiOx | PVA/TEOS | CPP | Printed layer / base material layer / barrier layer / HS layer |
| Experimental Example 13 | Present | OPP/OPP/OPP | Present | SiOx | PVA/TEOS | CPP | Printed layer / base material layer / barrier layer / HS layer |
| Experimental Example 14 | - | HDPE | - | - | - | LLDPE | Base material layer / HS layer |
| Experimental Example 15 | - | HDPE | Present | SiOx | - | LLDPE | Base material layer / barrier layer / HS layer |
| Experimental Example 16 | - | OPP | Present | SiOx | - | CPP | Base material layer / barrier layer / HS layer |
| Experimental Example 17 | Present | OPP | - | - | - | CPP | Printed layer / base material layer / HS layer |
| Experimental Example 18 | - | OPP | Present | - | PVA/PAA | CPP | Base material layer / barrier layer / HS layer |

| | | | | | | | |
|---|---|---|---|---|---|---|---|
| ^{∗}The skin layer of the base material layer was laminated to face the barrier layer side, and the inorganic oxide layer of the barrier layer was laminated to face the base material layer side. | | | | | | | |

### (Production of package)

A rectangular sample having a size of about 148 mm × 210 mm (A5 size) was cut out from a packaging material obtained in each example, two sheets of samples thus cut out were stacked such that the heat-seal layers (sealant films) of the samples faced each other, and the stacked samples were subjected to three-way impulse sealing into a pouch shape to obtain a packaging bag. The obtained packaging bag was filled with lard as fats and oils and sealed. The seal width was set to 5 mm (inner surface area 9 cm × 9 cm). As a result, a package including a packaging bag and contents including fats and oils packaged in the packaging bag was obtained.

### (Various evaluations)

### [Measurement of oxygen transmission rate]

The oxygen transmission rate (OTR) of a packaging material obtained in each example was measured according to JIS K-7126-2 by using an oxygen transmission rate measuring apparatus (manufactured by MOCON, Inc., trade name: OX-TRAN 2/20) under the conditions of a temperature of 30°C and a relative humidity of 70%. The oxygen transmission rate was measured after the production of the packaging material, after a Gelbo Flex Test that will be described below, after boiling treatment, and after retort treatment. The results are shown in Table 2.

### [Measurement of water vapor transmission rate]

The water vapor transmission rate (WVTR) of a packaging material obtained in each example was measured according to JIS K-7129 by using a water vapor transmission rate measuring apparatus (manufactured by MOCON, Inc., trade name: PERMATRAN 3/31) under the conditions of a temperature of 40°C and a relative humidity of 90%. The water vapor transmission rate was measured after the production of the packaging material, after a Gelbo Flex Test that will be described below, after boiling treatment, and after retort treatment. The results are shown in Table 2.

### [Gelbo Flex Test (GF test)]

A packaging material obtained in each example was attached to a fixed head of a Gelbo Flex Tester manufactured by TESTER SANGYO CO., LTD., so as to form a cylindrical shape having a diameter of 87.5 mm × 210 mm. Both ends of the cylindrically shaped packaging material were held and set at an initial gripping distance of 175 mm, an operation of applying a twist of 440 degrees in one direction and the opposite direction at a stroke of 87.5 mm was counted as one time, and the operation was performed ten times at a rate of 40 times/min.

### [Evaluation of fat-and-oil seepage suppressive properties]

The obtained package was subjected to heat sterilization treatment (boiling treatment at 95°C for 30 minutes, or retort treatment at 121°C for 30 minutes). The package after the heat sterilization treatment was examined by visual inspection, and the presence or absence of ink bleeding was checked. Thereafter, the package was stored at normal temperature, and the presence or absence of seepage of fats and oils to the package surface over time was examined by visual inspection and by touch. The results are shown in Table 2.
S: No seepage of fats and oils even after the passage of 9 months.
A: No seepage of fats and oils even after the passage of 6 months.
B: Seepage of fats and oils observed after the passage of 4 months.
C: Seepage of fats and oils observed after the passage of one week.

**[Table 2]**

| | Initial gas barrier properties | | After GF test | | After boiling | | | | After retort | | | |
|---|---|---|---|---|---|---|---|---|---|---|---|---|
| | | | Gas barrier properties | | Gas barrier properties | | Seepage of fats and oils | Ink bleeding | Gas barrier properties | | Seepage of fats and oils | Ink bleeding |
| | OTR | WVTR | OTR | WVTR | OTR | WVTR | | | OTR | WVTR | | |
| Experimental Example 1 | 0.5 | 0.4 | 7.5 | 0.7 | 0.9 | 0.6 | A | - | Not performed | | | - |
| Experimental Example 2 | 0.3 | 0.3 | 6.8 | 0.6 | 0.7 | 0.5 | A | - | Not performed | | | - |
| Experimental Example 3 | 0.2 | 0.4 | 7.2 | 0.5 | 0.7 | 0.5 | A | - | Not performed | | | - |
| Experimental Example 4 | 0.1 | 0.2 | 25.5 | 0.4 | 0.2 | 0.5 | A | - | 0.3 | 0.5 | A | - |
| Experimental Example 5 | 1.5 | 0.7 | 24.5 | 0.8 | 0.3 | 0.3 | A | - | 0.4 | 0.3 | A | - |
| Experimental Example 6 | 0.2 | 0.3 | 23.0 | 0.6 | 0.3 | 0.4 | A | - | 0.5 | 0.5 | A | - |
| Experimental Example 7 | 0.3 | 0.4 | 7.0 | 0.6 | 0.4 | 0.5 | A | - | 0.8 | 0.6 | A | - |
| Experimental Example 8 | 0.2 | 0.3 | 22.4 | 0.5 | 0.4 | 0.4 | A | . | 0.4 | 0.4 | A | - |
| Experimental Example 9 | 0.1 | 0.1 | 27.5 | 0.3 | 0.2 | 0.2 | A | Absent | 0.3 | 0.3 | A | Absent |
| Experimental Example 10 | 0.1 | 0.2 | 23.5 | 0.5 | 0.2 | 0.4 | S | . | 0.2 | 0.3 | S | - |
| Experimental Example 11 | 0.1 | 0.2 | 18.5 | 0.3 | 0.1 | 0.2 | A | Absent | 0.1 | 0.2 | A | Absent |
| Experimental Example 12 | 0.1 | 0.2 | 19.0 | 0.3 | 0.1 | 0.2 | S | Absent | 0.1 | 0.2 | S | Absent |
| Experimental Example 13 | 0.1 | 0.2 | 18.5 | 0.3 | 0.1 | 0.2 | S | Absent | 0.1 | 0.2 | S | Absent |
| Experimental Example 14 | - | 7.0 | - | 9.8 | - | 12.2 | C | - | Not performed | | | - |
| Experimental Example 15 | 10.3 | 3.5 | 26.5 | 8.4 | 12.5 | 7.5 | B | - | Not performed | | | - |
| Experimental Example 16 | 9.5 | 3.8 | 32.1 | 7.5 | 13.8 | 5.9 | B | . | 18.5 | 6.3 | C | - |
| Experimental Example 17 | - | 5.3 | - | 6.8 | - | 11.7 | C | Present | - | 13.8 | C | Present |
| Experimental Example 18 | 15.5 | 6.8 | 18.6 | 8.3 | 85 | 15 | C | - | Delamination | | C | - |

| | | | | | | | | | | | | |
|---|---|---|---|---|---|---|---|---|---|---|---|---|
| ^{∗}OTR unit: [cc/m²·day·atm], WVTR unit: [g/m²·day] | | | | | | | | | | | | |

### Industrial Applicability

In Experimental Examples 10 to 13, satisfactory results were shown in comparison with Experimental Examples 14 to 18 (corresponding to Comparative Examples). That is, it was found that the packaging material according to the present disclosure has excellent seepage suppressive properties against fats and oils and is capable of suitably packaging contents including fats and oils. Furthermore, in the packaging according to the present disclosure, the amount occupied by polyolefin in the total amount of the packaging material can be set to 90% by mass or more, and this enables material recycling.

### Reference Signs List

1: first polyolefin layer, 1a: homopolymer layer, 1b: copolymer layer, 2: inorganic vapor-deposited layer, 3: barrier coating layer, 4: second polyolefin layer, 5: printed layer, 10, 20, 30: packaging material.

## Claims

1. A packaging material for packaging contents including fats and oils, the packaging material comprising:
a barrier layer including a first polyolefin layer, an inorganic vapor-deposited layer, and a barrier coating layer; and
a second polyolefin layer having heat-sealability,
wherein the first polyolefin layer includes a homopolymer layer and a copolymer layer.

2. The packaging material according to claim 1, wherein the inorganic vapor-deposited layer includes at least either aluminum oxide or silicon oxide.

3. The packaging material according to claim 1 or 2, wherein the first polyolefin layer includes the homopolymer layer on the contents side.

4. The packaging material according to any one of claims 1 to 3, wherein the first polyolefin layer includes a pair of the copolymer layers and the homopolymer layer between the copolymer layers.

5. The packaging material according to any one of claims 1 to 4, further comprising a printed layer on opposite side of the barrier layer from the second polyolefin layer.

6. A packaging bag formed from the packaging material according to any one of claims 1 to 5.

7. A package comprising:
the packaging bag according to claim 6; and
contents including fats and oils packaged in the packaging bag.
